# EUROPÄISCHE PATENTSCHRIFT

(11) **EP 1 995 696 B1**
(45) Veröffentlichungstag und Bekanntmachung des Hinweises auf die Patenterteilung: **20.07.2011**
(21) Anmeldenummer: 07010101.9
(22) Anmeldetag: 22.05.2007
(51) Int. Cl.: G07C 9/00

(54) **Verfahren zur Zutrittskontrolle zu einer Sportanlage**
Method for access control to a sports facility
Procédé destiné au contrôle de l'accès à un terrain de sport

(43) Veröffentlichungstag der Anmeldung: 26.11.2008
(73) Patentinhaber: SkiData AG, 5083 Gartenau (AT)
(72) Erfinder: Kudelski, André, 1033 Cheseaux (CH)
(74) Vertreter: Karakatsanis, Georgios

(56) Entgegenhaltungen:
- EP-A- 0 621 566
- EP-A- 1 577 842
- EP-A- 1 647 918
- WO-A-01/54074
- DE-A1- 10 019 469

## Beschreibung

Die Erfindung bezieht sich auf ein Verfahren zur Zutrittskontrolle zu einer Sportanlage, insbesondere einer Wintersportanlage, wie einen Skilift, mit einem nicht übertragbaren Datenträger nach dem Oberbegriff des Anspruchs 1.

In Wintersportgebieten werden neben übertragbaren Karten, beispielsweise für einfache Fahrten oder Punktekarten, die zu einer einfachen bzw. mehrfachen Benutzung eines Skilifts oder dergleichen Personenbeförderungsanlage durch mehrere beliebige Personen berechtigen, häufig nicht übertragbare Karten oder dergleichen Datenträger ausgeben, die nur von einer einzigen Person benutzt werden dürfen. Meistens handelt es sich hierbei um Karten mit einer längeren Gültigkeitsdauer, wie Mehrtages- oder Saisonkarten. Da die nicht übertragbaren Karten bzw. Datenträger im Vergleich zu kurzfristigen Berechtigungen meist stark preisermäßigt sind, besteht die Gefahr, dass sie missbräuchlich von mehreren Personen benutzt werden.

Um dieser Gefahr zu begegnen, kann der Datenträger mit einem Foto der berechtigten Person versehen werden. Die Herstellung solcher Datenträger, die auch als Skipässe bezeichnet werden, ist jedoch mit einem erheblichen Aufwand, insbesondere Zeitaufwand verbunden, der zu langen Warteschlangen an der Kassa führen kann.

Darüber hinaus ist eine Kontrollperson am Zugang der Wintersportanlage erforderlich, die visuell die Übereinstimmung des Fotos auf dem Datenträger mit dem Benutzer des Skipasses beim Zutritt zu der Wintersportanlage überprüft. Eine solche visuelle Kontrolle wird von den berechtigten Benutzern oft als überzogen angesehen und damit als unangenehm empfunden. Es wird deshalb meist nur eine lückenhafte Kontrolle durch Stichproben durchgeführt.

Damit eine solche visuelle Kontrolle durch eine Kontrollperson am Zugang für den Benutzer nicht sichtbar wird, ist es bekannt, die Identitätsfotos digitalisiert in einer Datenbank zu speichern und in der Nähe des Zugangs auf einem Monitor darzustellen. Auch hier können aber nur Stichproben durchgeführt werden. Zudem bleibt der Aufwand, insbesondere der Zeitaufwand, für die Herstellung der Fotos an der Kassa erhalten.

Ferner ist es bekannt, am Zugang zu der Sportanlage eine Digitalkamera vorzusehen, die ein Foto beim ersten Zutritt von dem Benutzer aufnimmt, das zusammen mit den von der Leseeinrichtung am Zugang ausgelesenen Zutrittsberechtigungsdaten des nicht übertragbaren Datenträgers in einer Datenbank abgespeichert wird und mit einem Foto, das von der Digitalkamera bei einem weiteren Zutritt aufgenommen wird, auf Übereinstimmung überprüft wird (EP 1647918 A1). Damit erübrigt sich zwar die Herstellung des Datenträgers an der Kassa, nicht aber die visuelle Prüfung der Fotos.

Aus AT 601 U1 ist es bekannt, die Zugangsberechtigungsdaten zu einer Skianlage in einem berührungslos arbeitenden Datenträger abzulegen, der am Ski angebracht ist, und den Zugang zu der Skianlage am Boden mit einer Antenne zu versehen, um die in dem Datenträger abgelegten Zugangsberechtigungsdaten zu überprüfen.

Weiterhin ist es aus FR 2778978 A1 bekannt, einen berührungslos arbeitenden Datenträger in einem Ski vorzusehen, um Skidiebstähle zu verhindern. Aus DE 1001969 C2 geht ein Ausleihsystem für Wintersportgeräte hervor, bei dem der Benutzer einen Datenträger mit einer Zugangsberechtigung trägt und die ausgeliehenen Ski mit einem Datenträger versehen sind, der die gleichen Zugangsberechtigungsdaten aufweist. Die beiden Datenträger werden ausgelesen und bei fehlender Übereinstimmung wird der Zugang gesperrt.

Die DE10019469A zeigt ein Ausleihsystem für Sportgeräte. Ausgeliehene Sportgeräte (z.B. Skier) werden mit einem berührungslos arbeitenden Datenträger versehen, auf dem die gleichen Personenidentifikationsdaten abgelegt sind wie im Zugangsberechtigungsdatenträger. Der berührungslos arbeitende Datenträger des Sportgeräts ist über ein Lesegerät mit einer Einrichtung verbunden, die die Personenidentifikationsdaten auf dem Datenträger des Sportgeräts mit den Daten auf dem Zugangsberechtigungsdatenträger vergleicht. Bei fehlender Übereinstimmung der Daten wird das Drehkreuz gesperrt.

Aufgabe der Erfindung ist es, ein Verfahren zur Verfügung zu stellen, mit dem die missbräuchliche Weitergabe nicht übertragbarer Datenträger für den Zutritt zu einer Sportanlage auf einfache Weise wirksam verhindert werden kann.

Dies wird erfindungsgemäß mit dem im Anspruch 1 gekennzeichneten Verfahren erreicht. In den Unteransprüchen sind vorteilhafte Ausgestaltungen der Erfindung wiedergegeben.

Der nicht übertragbare Datenträger, den der Benutzer trägt, kann beispielsweise ein Ticket mit einem Barcode, einem Magnetstreifen oder einem elektronischen Chip sein. Dabei kann ein Kontakt behafteter Chip oder ein Chip mit Antenne, also ein berührungslos arbeitender Datenträger, insbesondere ein Transponder, vorgesehen sein. Der berührungslos arbeitende Datenträger kann z. B. auch in einer Armbanduhr, einem Kleidungsstück, beispielsweise einem Handschuh, das der Benutzer trägt, vorgesehen sein.

Bei einem berührungslos arbeitendem Datenträger weist die Leseeinrichtung eine Antenne auf, vorzugsweise eine Antennenspule, die so ausgebildet ist, dass sie einen zwischen Knie- und Kopfhöhe vom Benutzer getragenen Datenträger sicher erfasst. Zur Benutzung des nicht übertragbaren Datenträgers ist nur eine einzige Person berechtigt. Dazu können in dem nicht übertragbaren Datenträger als Zutrittsberechtigungsdaten neben der Gültigkeitsdauer und dergleichen beispielsweise der Name der berechtigten Person oder andere personenspezifische Daten abgelegt sein.

Der weitere Datenträger, der erfindungsgemäß zum Einsatz kommt, ist an einem Ausrüstungsgegenstand des Benutzers vorgesehen, den er zur Ausübung des Sports in der Nähe des Bodens trägt, also in einer Höhe unterhalb der Knie, insbesondere in Fußhöhe oder darunter.

Dazu kann der weitere Datenträger beispielsweise bei einer Wintersportausrüstung in einem oder beiden Ski, in einem Snowboard, in einem oder beiden Ski- bzw. Snowboardstiefeln, beispielsweise in der Sohle, in einem Bindungsteil, wie der Zehen- oder Fersenhalterung oder der Bindungsplatte, in der Skibremse oder z. B. in dem oder beiden Skistöcken oder dergleichen vorgesehen sein, aber beispielsweise auch in einem Schlitten oder einem anderen Sporgerät.

Als weiterer bodennaher Datenträger wird dabei ein berührungslos arbeitender Datenträger, insbesondere ein Transponder, verwendet, der von einer im Bodenbereich vorgesehenen Antenne ausgelesen wird, die vorzugsweise als Antennenspule ausgebildet ist. Die Antenne kann dazu am Zugang zu dem Skilift oder dergleichen Sportanlage in den Boden eingelegt sein oder auf dem Boden angeordnet sein, z. B. in einer Matte mit einer Gleitoberfläche, etwa Borsten, für Ski.

Die Antenne braucht jedoch nicht direkt am Boden angeordnet zu werden. So kann sie z. B. auch im unteren Bereich des Gestänges vorgesehen sein, das den Zugang seitlich begrenzt. Wenn der nicht übertragbare Datenträger gleichfalls berührungslos arbeitet, also mit einer Leseeinrichtung mit Antenne auslesbar ist, kann die Antenne im Bodenbereich an die gleiche Leseeinrichtung angeschlossen sein wie die Antenne für den nicht übertragbaren Datenträger. Es ist jedoch auch möglich, eine weitere Leseeinrichtung vorzusehen, an die die Antenne im Bodenbereich angeschlossen ist.

Wenn der nicht übertragbare Datenträger ein berührungslos arbeitender Datenträger ist, kann die Leseeinrichtung zum Auslesen der Zugangsberechtigungsdaten des nicht übertragbaren Datenträgers auch eine Antenne aufweisen, die sich bis zum Bodenbereich erstreckt, um zugleich die Antenne zum Auslesen des bodennahen Datenträgers zu bilden.

Die Kontrolldaten des weiteren, bodennahen berührungslosen Datenträgers können Daten sein, die für die Sportausrüstung spezifisch sind, beispielsweise der Hersteller, die Seriennummer des Sportausrüstungsgegenstandes, oder Daten, die für den berührungslosen Datenträger spezifisch sind, beispielsweise eine Seriennummer des elektronischen Chips des berührungslosen Datenträgers.

Beim Zutritt des Benutzers zu der Sportanlage werden die mit der Leseeinrichtung ausgelesenen Zutrittsberechtigungsdaten des nicht übertragbaren Datenträgers mit den beim Zutritt ausgelesenen Kontrolldaten des bodennahen Datenträgers in einem Rechner durch eine Programmlogik verknüpft und z. B. in dem Rechner oder einer Datenbank abgespeichert, die an die Leseeinrichtung oder -einrichtungen angeschlossen ist. Die Daten, die mit der Programmlogik verknüpft werden, sind dabei vorzugsweise die benutzungsspezifischen Daten, z. B. der Name des Benutzers des nicht übertragbaren Datenträgers mit für die Sportausrüstung oder den bodennahen Datenträger spezifischen Daten.

Bei einem weiteren Zutritt werden die Zutrittsberechtigungsdaten des nicht übertragbaren Datenträgers, die von der Leseeinrichtung ausgelesen werden, und die Kontrolldaten des bodennahen Datenträgers, die von der Antenne im Bodenbereich ausgelesen werden, mit den in der abgespeicherten und verknüpften Daten verglichen, wobei bei fehlender Übereinstimmung mit den gespeicherten, verknüpften Daten der Zugang gesperrt wird.

Um eine lückenlose Kontrolle durchzuführen, werden vorzugsweise die Zugangsberechtigungsdaten des nicht übertragbaren Datenträgers und die Kontrolldaten des bodennahen Datenträgers bereits beim ersten Zutritt des Benutzers zu der Sportanlage miteinander verknüpft und abgespeichert. Darüber hinaus werden die Zugangsberechtigungsdaten des nicht übertragbaren Datenträgers und die Kontrolldaten des bodennahen Datenträgers bei jedem weiteren Zutritt des Benutzers ausgelesen und auf Übereinstimmung mit den beim ersten Zutritt abgespeicherten verknüpften Daten überprüft.

Der Zugang weist eine Personenvereinzelungseinlage auf, die unterschiedlich ausgebildet sein kann. So kann z. B. zum Sperren des Zugangs eine mechanische Sperre, insbesondere ein Drehkreuz vorgesehen sein, jedoch auch eine optische Signaleinrichtung, beispielsweise eine Ampel, oder eine akustische Signaleinrichtung. Die optische bzw. akustische Signaleinrichtung kann am Zugang oder an einem von einer Kontrollperson überwachten Endgerät vorgesehen sein.

Die Erfindung ist insbesondere für Wintersportanlagen mit mehreren Skiliften und dergleichen Personenbeförderungsanlagen bestimmt. Der Erstzutritt und jeder weitere Zutritt ist dann der erste Zutritt zu einer bzw. ein weiterer Zutritt zu derselben oder einer anderen Personenbeförderungseinrichtung der Wintersportanlage.

Die Sportausrüstung ist im Allgemeinen an den Benutzer individuell angepasst. So ist z. B. die Länge der Ski im Allgemeinen von der Körpergröße des Benutzers abhängig, die Skibindung ist auf die Schuhgröße des Benutzers eingestellt, usw. Dadurch ist erfindungsgemäß eine Weitergabe der Sportausrüstung von dem berechtigten Benutzer an einen Nichtberechtigten und damit ein Missbrauch des nicht übertragbaren Datenträgers so gut wie ausgeschlossen. Zudem erfordert das erfindungsgemäße Verfahren keinen zusätzlichen Zeitaufwand und es ist vollautomatisch durchführbar. Auch sind die Kosten für den Datenträger in der Sportausrüstung heutzutage praktisch vernachlässigbar.

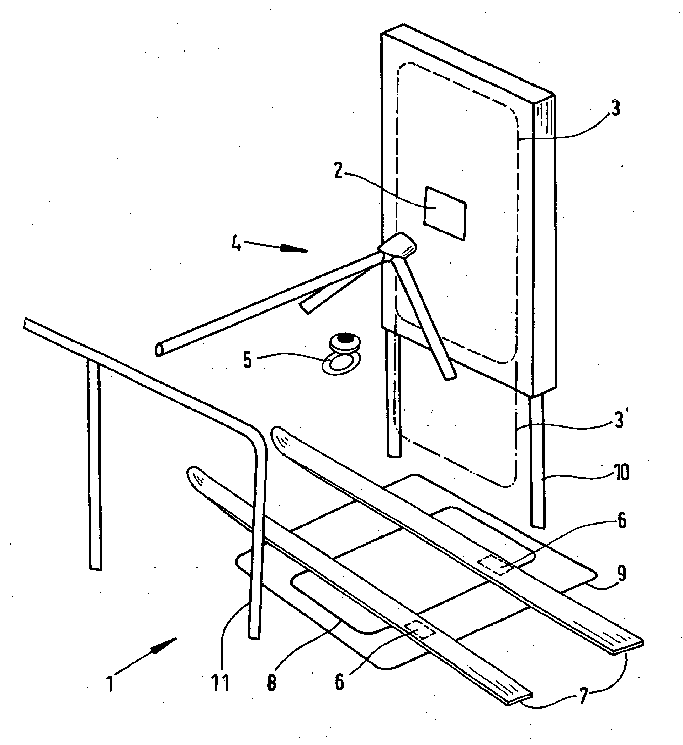

Nachstehend ist eine Ausführungsform der Erfindung anhand der beigefügten Zeichnung beispielhaft näher beschrieben, deren einzige Figur den Zugang zu einer Wintersportanlage zeigt.

Danach weist der Zugang 1 z. B. zu einem Skilift eine Leseeinrichtung 2 mit einer gestrichelt dargestellten Antenne 3 vor einem Drehkreuz 4 auf. Mit der Leseeinrichtung 2 werden beim Zutritt die Zugangsberechtigungsdaten von einem nicht übertragbaren Datenträger 5 ausgelesen, der z. B. in einer Armbanduhr vorgesehen ist, die der Benutzer trägt.

Ein weiterer berührungslos arbeitender Datenträger 6 ist in der bodennahen Sportausrüstung 7, nämlich in den Ski des Benutzers vorgesehen. Der weitere Datenträger 6 ist mit Kontrolldaten versehen, beispielsweise mit einer Seriennummer des elektronischen Chips des Datenträgers 6.

Der Datenträger 6 in der bodennahen Sportausrüstung bzw. den Ski 7, wird mit einer Antenne 8 ausgelesen, die z. B. in einer Matte 9 am Boden des Zugangs 1 vor dem Drehkreuz 4 ausgelegt ist. Die Antenne 8 kann an die Leseeinrichtung 2 angeschlossen sein.

Falls der nicht übertragbare Datenträger 5 gültige Zugangsberechtigungsdaten enthält, gibt das Drehkreuz 4 den Zugang beim Erstzutritt frei. Zugleich werden beim Erstzutritt die von der Leseeinrichtung 2 aus dem nicht übertragbaren Datenträger 5 ausgelesenen Zutrittsberechtigungsdaten mit den mit der Antenne 8 aus dem Datenträger 6 ausgelesenen Kontrolldaten in einem Rechner mit einer Programmlogik verknüpft und z. B. in einer Datenbank abgespeichert. Mit der Programmlogik können z. B. benutzerspezifische Daten, wie der Name des Benutzers, und die Chipseriennummer des Datenträgers 6 verknüpft werden.

Bei jedem weiteren Zutritt werden neben den Zutrittsberechtigungsdaten des nicht übertragbaren Datenträgers 5 mit der Antenne 3 und die Kontrolldaten des bodennahen Datenträgers 6 mit der Antenne 8 ausgelesen und mit den beim Erstzutritt gespeicherten verknüpften Daten mit dem Rechner verglichen. Bei gültigen Zugangsberechtigungsdaten und Übereinstimmung der bei dem weiteren Zutritt aus den Datenträgern 5 und 6 ausgelesenen Daten mit den beim Erstzutritt gespeicherten und verknüpften Daten gibt das Drehkreuz 4 den Zugang frei, während bei fehlender Übereinstimmung das Drehkreuz 4 den Zugang 1 sperrt.

Wie in der Zeichnung mit 3' strichpunktiert angedeutet, kann die Antenne 3 zum Auslesen des nicht übertragbaren Datenträgers 5 sich auch bis zum Bodenbereich hinab erstrecken und damit zugleich die Antenne zum Auslesen des bodennahen Datenträgers 6 bilden. Auch kann die Antenne zum Auslesen des bodennahen Datenträgers 6 z. B. im Bereich des Gestells 10 oder Gestänges 11 angeordnet sein, das den Zugang 1 seitlich begrenzt.

## Patentansprüche

1. Verfahren zur Zutrittskontrolle zu einer Sportanlage mit einem von dem Benutzer getragenen, nicht übertragbaren Datenträger (5), wobei die Zutrittsberechtigungsdaten von dem Datenträger (5) von einer Leseeinrichtung (2) am Zugang (1) zu der Sportanlage beim Zutritt ausgelesen werden, und wobei wenigstens ein weiterer Datenträger (6) bodennah an der Sportausrüstung (7) des Benutzers vorgesehen ist, der Kontrolldaten aufweist, die von einer Antenne (3', 8) im Bereich des Bodens am Zugang (1) zu der Sportanlage beim Zutritt ausgelesen werden, **dadurch gekennzeichnet, dass** die beim ersten Zutritt des Benutzers zu der Sportanlage ausgelesenen Zutrittsberechtigungsdaten des nicht übertragbaren Datenträgers (5) mit den beim ersten Zutritt ausgelesenen Kontrolldaten des bodennahen Datenträgers (6) durch eine Programmlogik verknüpft und abgespeichert werden, bei einem weiteren Zutritt die Zutrittsberechtigungsdaten des nicht übertragbaren Datenträgers (5) von der Leseeinrichtung (2) und die Kontrolldaten des bodennahen Datenträgers (6) von der Antenne (3', 8) ausgelesen werden und bei fehlender Übereinstimmung mit den gespeicherten verknüpften Daten der Zugang (1) gesperrt wird.

2. Verfahren nach Anspruch 1, **dadurch gekennzeichnet, dass** die Zutrittsberechtigungsdaten des nicht übertragbaren Datenträgers (5) und die Kontrolldaten des bodennahen Datenträgers (6) bei jedem weiteren Zutritt des Benutzers ausgelesen und auf Übereinstimmung mit den beim ersten Zutritt abgespeicherten verknüpften Daten überprüft werden.

3. Verfahren nach einem der vorstehenden Ansprüche, **dadurch gekennzeichnet, dass** als Kontrolldaten des bodennahen Datenträgers (6) sportausrüstungsspezifische oder datenträgerspezifische Daten verwendet werden.

4. Verfahren nach einem der vorstehenden Ansprüche, **dadurch gekennzeichnet, dass** der nicht übertragbare Datenträger (5) ein berührungslos arbeitender Datenträger ist und die Leseeinrichtung zum Auslesen der Zugangsberechtigungsdaten des nicht übertragbaren Datenträgers (5) eine Antenne (3') aufweist, die zugleich die Antenne zum Auslesen des bodennahen Datenträgers (6) bildet.

## Claims

1. A method of controlling access to a sport facility using a user-borne non-transferrable data medium (5), with the access authorization data read out from data medium (5) upon entry to the sport facility by reading means (2) at the accessway (1), and with at least one additional data medium (6) provided near ground level on the user's sport equipment (7), said additional data medium bearing control data read out upon entry by antenna means (3', 8) located in the general area of the ground at the accessway (1) to the sport facility, **characterized in that** access authorization data on non-transferrable data medium (5) read out when the user accessed the sport facility for the first time are combined by program logic with the control data on said ground-level data medium (6) read out upon said first entry and are stored, and **in that**, upon further entry, the access authorization data on the non-transferrable data medium (5) are read out by said reading means (2), the control data on said ground-level data medium (6) are read out by antenna (3', 8), and accessway (1) is barred in case of mismatch with the stored combined data.

2. Method as in claim 1, **characterized in that** the access authorization data on non-transferrable data medium (5) and the control data on ground-level data medium (6) are read out upon each user entry and tested for a match with the combined data stored upon first entry.

3. Method as in any one of the preceding claims, **characterized in that** the data used as control data on the ground-level data medium (6) comprise data specific to the sport equipment or to the data medium.

4. Method as in any one of the preceding claims, **characterized in that** the non-transferrable data medium (5) comprises a medium operating on a non-contacting basis and **in that** said reading means used for reading out the access authorization data from non-transferrable data medium (5) comprise an antenna (3') which at the same time forms the antenna for reading out said ground-level data medium (6).

## Revendications

1. Procédé pour le contrôle de l'accès à une installation sportive avec un support de données non cessible (5) porté par l'utilisateur, dans lequel les données d'autorisation d'accès sont lues sur le support de données (5) par un dispositif de lecture (2) à l'entrée (1) de l'installation sportive lors de l'accès, et dans lequel au moins un autre support de données (6) est prévu près du sol sur l'équipement sportif (7) de l'utilisateur, qui présente des données de contrôle qui sont lues par une antenne (3', 8) au niveau du sol à l'entrée (1) de l'installation sportive lors de l'accès, **caractérisé en ce que** les données d'autorisation d'accès du support de données non cessible (5) lues lors du premier accès de l'utilisateur à l'installation sportive sont associées aux données de contrôle du support de données proche du sol (6) lues lors du premier accès et mémorisées, les données d'autorisation d'accès du support de données non cessible (5) sont lues lors d'un accès suivant par le dispositif de lecture (2) et les données de contrôle du support de données proche du sol (6) par l'antenne (3', 8) et, s'il n'y a pas concordance avec les données associées mémorisées, l'entrée (1) est barrée.

2. Procédé selon la revendication 1, **caractérisé en ce que** les données d'autorisation d'accès du support de données non cessible (5) et les données de contrôle du support de données proche du sol (6) sont lues lors de chaque nouvel accès de l'utilisateur et leur concordance avec les données associées mémorisées lors du premier accès est vérifiée.

3. Procédé selon l'une des revendications précédentes, **caractérisé en ce que** les données de contrôle du support de données proche du sol (6) sont des données spécifiques de l'équipement sportif ou spécifiques du support de données.

4. Procédé selon l'une des revendications précédentes, **caractérisé en ce que** le support de données non cessible (5) est un support de données fonctionnant sans contact et le dispositif de lecture pour la lecture des données d'autorisation d'accès du support de données non cessible (5) présente une antenne (3') qui forme en même temps l'antenne pour la lecture du support de données proche du sol (6).
